# EUROPEAN PATENT APPLICATION

(11) **EP 1 484 525 A2**
(43) Date of publication of application: **08.12.2004**
(21) Application number: 04102310.2
(22) Date of filing: 26.05.2004
(51) Int. Cl.: F16F 9/04, C08J 5/06, B32B 25/02

(54) **Airsleeve**

(30) Priority: 03.06.2003 US 453021
(71) Applicant: THE GOODYEAR TIRE & RUBBER COMPANY, Akron, Ohio 44316-0001 (US)
(72) Inventor: Kerstetter, Randal Howard, III, Wadsworth OH 44281 (US)
(74) Representative: Kutsch, Bernd

(57) **Abstract**

The present invention is directed to an airsleeve having an elastomeric liner, a reinforcing layer overlaying the liner, and an elastomeric cover overlaying the reinforcing layer, the reinforcing layer comprising textile fibers having distributed over surface portions thereof an RFL adhesive, and a vulcanizable plycoat rubber composition comprising 20 to 70 parts by weight of natural or synthetic polyisoprene rubber (IR) and 30 to 80 parts by weight of chlorinated butyl rubber (CIIR).

## Description

### Field of the Invention

The present invention is directed to an airsleeve according to claim 1.

### Background of the Invention

Air springs have been used for motor vehicles and various machines and other equipment for a number of years. The springs are designed to support a suspension load such as a vehicle. The air spring usually consists of a flexible elastomeric reinforced airsleeve that extends between a pair of end members. The airsleeve is attached to end members to form a pressurized chamber therein. The end members mount the air spring on spaced components or parts of the vehicle or equipment on which the air spring is to be mounted. The internal pressurized gas, usually air, absorbs most of the motion impressed upon or experienced by one of the spaced end members. The end members move inwards and towards each other when the spring is in jounce and away and outwards from each other when the spring is in rebound. The design height of the air spring is a nominal position of the spring when the spring is in neither jounce nor rebound.

There have been two basic designs of air springs: a rolling lobe air spring, as seen in US-A- 5,954,316; and a bellows type air spring, as seen in US-A- 3,084,952.

The plies of cord fabric are contained within a reinforcement layer, which along with the cord fabric includes an elastomeric base, or plycoat, made from a rubber compound.

In the manufacture of fabric-reinforced, molded rubber articles such as airsleeves, it is desirable to obtain strong adhesion between the fabric and the rubber, and also high resistance to deterioration of the bond with flexing of the structure.

The adhesion of the plycoat to the cover is essential for acceptable performance of composites in applications such as air sleeves. Further, the adhesion of the reinforcing cord to the plycoat is essential for field performance, especially for its high stress tolerance. An adhesive based on a styrene-butadiene rubber (SBR) latex, a vinylpyridine/styrene/butadiene terpolymer latex, and a resorcinol/formaldehyde condensate is typically used to adhere the cord to the plycoat.

The rubber compounds used in the airspring cover are dictated largely by the operating environment to which the airspring is exposed. For airsleeves exposed to a high temperature operating environment, up to about 115°C, an ECO based compound may be used for the cover, along with a natural rubber plycoat compound. While this combination of an ECO cover with a natural rubber plycoat provides a good service life, automotive specifications require increasingly better performance from airsleeves.

### Description of the Invention

In one embodiment, the present invention is directed to an airsleeve having a reinforcing layer comprising textile fibers having distributed over surface portions thereof an resorcinol formaldehyde latex (RFL) adhesive, and a plycoat comprising a vulcanizable rubber composition comprising 20 to 70 parts by weight of natural or synthetic polyisoprene rubber (IR) and 30 to 80 parts by weight of chlorinated butyl rubber (chlorobutyl rubber, or CIIR).

The reinforcing layer includes a plycoat comprising a curable rubber composition. One component of the curable rubber composition is natural rubber or synthetic polyisoprene. In one embodiment, the curable or vulcanizable rubber composition may include 20 to 70 parts by weight of natural rubber or synthetic polyisoprene. In another embodiment, the rubber composition may include 30 to 50 parts by weight of natural rubber or synthetic polyisoprene.

The plycoat rubber composition also includes chlorinated butyl rubber (chlorobutyl rubber, CIIR). As is known in the art, chlorobutyl rubber is a chlorinated copolymer of isobutylene and isoprene. In one embodiment, the plycoat rubber composition may include from 30 to 80 parts by weight of chlorobutyl rubber. In another embodiment, the rubber composition may include 50 to 70 parts by weight of chlorinated butyl rubber.

Suitable chlorinated butyl rubber may be considered part of a larger group of halogenated isobutylene rubbers. By the term "halogenated isobutylene rubber" is meant a halogenated polymer comprising isobutylene subunits. Halogens include chlorine and bromine. The halogenated rubbers used in this invention include polymers bearing halogen atoms incorporated before or after polymerization.

The halogenated isobutylene rubbers used in this invention include, but are not limited to, brominated butyl rubber (commonly called bromobutyl and abbreviated BIIR where isoprene is the diene copolymerized with isobutylene; as used herein, the term "butyl rubber" means a copolymer of isobutylene and a diene such as isoprene); chlorinated butyl rubber (commonly called chlorobutyl and abbreviated CIIR where isoprene is the diene copolymerized with isobutylene); so-called star-branched polyisobutylene comprising branched or star-shaped polyisobutylene subunits, such as star-branched bromobutyl and star-branched chlorobutyl; isobutylene-bromomethylstyrene copolymers such as isobutylene/meta-bromomethylstyrene and isobutylene/parabromomethylstyrene, isobutylene/chloromethylstyrene copolymers such as isobutylene/meta-chloromethylstyrene and isobutylene/parachloromethylstyrene, and the like, including and mixtures thereof.

The halogenated isobutylene rubbers also include halogenated isobutylene containing terpolymers, such as halogenated isobutylene/styrene/dienes; eg, isobutylene/styrene/isoprene and halogenated isobutylene/methylstyrene/dienes; eg, isobutylene/methylstyrene/isoprene; isobutylene/halomethylstyrene/diene terpolymers including isobutylene/bromomethylstyrene/isoprene; isobutylene/haloisobutylene/dienes, including isobutylene/bromobutylene/isoprene; and the like, and mixtures thereof with other halogenated isobutylene rubbers.

The term "phr" as used herein, and according to conventional practice, refers to "parts by weight of a respective material per 100 parts by weight of rubber, or elastomer".

The vulcanization of the plycoat composition is conducted after a sulfur-vulcanizing agent has been intimately dispersed in the composition. Examples of suitable sulfur-vulcanizing agents include elemental sulfur (free sulfur), an amine disulfide, polymeric polysulfide or sulfur olefin adducts. Preferably, the sulfur-vulcanizing agent is elemental sulfur. The sulfur-vulcanizing agent may be used in an amount ranging from 0.1 to 8 phr, with a range of from 0.5 to 5.0 being preferred.

It is readily understood by those having skill in the art that the plycoat rubber composition would be compounded by methods generally known in the rubber compounding art, such as mixing the rubbers with various commonly used additive materials such as, for example, curing aids, activators, retarders, processing oils, resins, reinforcing resins, tackifying resins, plasticizers, fillers, pigments, fatty acids, zinc oxide, magnesium oxide, waxes, antioxidants, antiozonants and peptizing agents. Typical amounts of reinforcing-type carbon blacks(s), comprise 30 to 150 phr. Representative examples of such carbon blacks include N110, N121, N220, N231, N990 and N991. Typical amounts of resins comprise 0.5 to 10 phr, usually 1 to 5 phr. Representative examples of such resins include phenolformaldehyde resins, hydrocarbon resins, coumarone-indene resins, and methylene donor/methylene acceptor type resins. Typical amounts of processing oils comprise 1 to 50 phr. Such processing oils can include, for example, aromatic, napthenic, and/or paraffinic processing oils. Typical amounts of antioxidants comprise 1 to 5 phr. Representative antioxidants may be, for example, diphenyl-p-phenylenediamine and others, such as, for example, those disclosed in The Vanderbilt Rubber Handbook (1978), pages 344-346. Typical amounts of antiozonants comprise 1 to 5 phr. Typical amounts of fatty acids (such as stearic acid and oleic acid) are used in an amount ranging from 0.2 to 3 phr. Typical amounts of zinc oxide comprise 0.5 to 8 phr. Typical amounts of magnesium oxide ranges from 0 to 1.0 phr. Typical peptizers may be, for example, pentachlorothiophenol and dibenzamidodiphenyl disulfide.

Accelerators may be used to control the time and/or temperature required for vulcanization and to improve the properties of the vulcanizate. In one embodiment, only a primary accelerator may be used. In another embodiment, combinations of a primary and a secondary accelerator might be used with the secondary accelerator being used in smaller amounts (of 0.05 to 1.0 phr) in order to activate and to improve the properties of the vulcanizate. In addition, delayed action accelerators may be used which are not affected by normal processing temperatures but produce a satisfactory cure at ordinary vulcanization temperatures. Suitable types of accelerators that may be used in the present invention are sulfenamides, amines, disulfides, guanidines, thioureas, thiazoles, thiurams, dithiocarbamates, xanthates and mixtures thereof. If a second accelerator is used, the secondary accelerator is preferably a guanidine, dithiocarbamate or thiuram compound.

The mixing of the plycoat rubber composition is preferably done in at least two stages, namely at least one non-productive stage followed by a productive mix stage. The final curatives including sulfur-vulcanizing agents and accelerators are typically mixed in the final stage which is conventionally called the "productive" mix stage in which the mixing typically occurs at a temperature, or ultimate temperature, lower than the mix temperature(s) of the preceding non-productive mix stage(s). The rubber and carbon black, if used, may be mixed in one or more non-productive mix stages.

Vulcanization of the plycoat rubber composition of the present invention is generally carried out from 110°C to 180°C. Any of the usual vulcanization processes may be used such as heating in a press or mold, heating with superheated steam or hot air or in a salt bath.

The reinforcing layer includes, along with the plycoat, textile fibers treated with an RFL type adhesive dip. Textile fibers in the form of suitable cord or fabric may be in various forms, including woven fabrics, knitted fabric, or spun bonded fabric, and fiber cord. The cord or fabric may be comprised of various materials typically used as reinforcement in composite materials, including rayon, nylon, polyester, aramid, cotton, and combinations thereof. In one embodiment, the cord or fabric is nylon or polyester.

The reinforcing layer includes an adhesive composition useful in adhering textile fibers to the plycoat. In one embodiment, the so-called RFL adhesive composition may be comprised of resorcinol, formaldehyde, and one or more polymer latexes. In one embodiment, the polymer latex may include one or more of styrene-butadiene copolymer latex, vinylpyridine-styrene-butadiene terpolymer latex, or latexes made from polymers included in the plycoat, liner, or cover compositions.

The RFL adhesive dip is, in general, used in the form of an aqueous latex. The latices are prepared by free radical emulsion polymerization of styrene and butadiene to form a copolymer latex, and free radical emulsion polymerization of styrene, butadiene, and vinylpyridine to form a terpolymer latex. The charge compositions used in the preparation of the latices contain monomers, at least one surfactant, and at least one free radical initiator. Such latices are well known, and a suitable RFL dip may be made by any of various methods as are known in the art, for example, following the teaching of US-A-3,525,703.

The RFL adhesive may optionally include a blocked isocyanate. In one embodiment from 1 to 20 parts by solid of blocked isocyanate is added to the adhesive. The blocked isocyanate may be any suitable blocked isocyanate known to be used in RFL adhesive dips including, but not limited to, caprolactam blocked methylene-bis-(4-phenylisocyanate), such as Grilbond-IL6 available from EMS American Grilon, Inc, and phenolformaldehyde blocked isocyanates as disclosed in US-A- 3,226,276; 3,268,467; and 3,298,984.

In accordance with this invention, the cord or fabric to be treated is dipped for one to three minutes in the RFL dip, and dried at a temperature within the range of 75°C to 265°C for 0.5 minutes to 20 minutes, and thereafter calendered into the plycoat rubber compound and cured therewith. The dip process may be carried out in one or two steps. Adjustment of the solids content of the dips for a one or two-step dipping process is done as required, as is known to one skilled in the art.

The airsleeve further includes an elastomeric liner and an elastomeric cover. The liner and cover may each comprise vulcanizable rubber compounds; the compounds used in the liner may be the same as that used in the cover, or it may be different. Elastomers that may be used in the liner and cover compounds include at least one elastomer selected from among elastomers conventionally used in manufacturing air sleeves included, but not limited to, elastomers such as epichlorohydrin rubber, polyisobutylene, halogenated butyl rubbers, natural rubber, polyisoprene, polybutadiene, styrene-butadiene, and blends of such elastomers. In one embodiment, the liner or cover compounds may include epichlorohydrin rubber, chlorinated butyl rubber, or brominated butyl rubber. The liner and cover compounds may include any of various additives and fillers as in the plycoat compound.

Epichlorohydrin rubber suitable for use includes (1) homopolymers of epichlorohydrin, (2) copolymers of an epiochlorohydrin with less than 30% of saturated epoxy monomers or with an unsaturated epoxy monomer, and (3) terpolymers of an epichlorohydrin with (a) less than 30 % of a saturated epoxy monomer or mixtures thereof, (b) an unsaturated epoxy monomer or mixtures thereof, or (c) mixtures of (a) and (b). The epichlorohydrin polymers are prepared by polymerizing a monomeric epichlorohydrin alone or together with one or more of the aforementioned epoxy monomers with a suitable catalyst, such as an organometallic catalyst. For example, a reaction product of water with an alkyl aluminum compound is a suitable organometallic catalyst. Typical saturated epoxy monomers include alkylene oxides, such as ethylene oxide, and typical unsaturated epoxy monomers include allylglycidyl ether. The properties and the preparation of epichlorohydrin polymers suitable for use in the practice of this invention are known in the art and are described, for example, in US-A- 3,158,500, the disclosure of which is incorporated herein by reference.

Vulcanization of the airsleeve is generally carried out at conventional temperatures ranging from 100°C to 200°C. Preferably, the vulcanization is conducted at temperatures ranging from 110°C to 180°C. Any of the usual vulcanization processes may be used such as heating in a press or mold, heating with superheated steam or hot air. Such composites can be built, shaped, molded and cured by various methods which are known and will be readily apparent to those having skill in such art. Methods for making air sleeves are described in US-A- 3,794,538 and 6,264,178.

The airsleeve may be used in any of various airspring applications including truck cab suspension springs, truck driver seat springs, automobile air springs, and a variety of industrial air springs. These airsprings may be of various designs including, but not limited to, a rolling lobe air spring, for example as in US-A- 5,954,316, and a bellows type air spring, for example as in US-A-3,084,952.

### EXAMPLE

Plycoat compounds were prepared according to Table 1, with amounts in parts per hundred resin (phr). Plycoat test samples were prepared using samples 1-5 and tested for physical properties as indicated in Table 2. Plycoat/cover samples were prepared using samples 1-5 and a cover compound containing epichlorohydrin rubber and tested for adhesion as indicated in Table 2. Tests were done according to the following protocols:

### Rheometer

ODR at 150°C (302°F), ASTM D2048
Mooney Scorch at 121°C (250°F), ASTM D1646

### Tensile, Elongation, and Hardness

Original, ASTM D412

### Adhesion to ECO cover compound, modified ASTM D413

Original

### Other

Die C tear, ASTM D624

**Table 1**

| | control | invention | invention | control | control |
|---|---|---|---|---|---|
| Sample | 1 | 2 | 3 | 4 | 5 |
| polyisoprene¹ | 100 | 30 | 50 | 0 | 0 |
| CIIR | 0 | 70 | 50 | 70 | 50 |
| polychloroprene² | 0 | 0 | 0 | 30 | 50 |
| carbon black³ | 47 | 60 | 60 | 60 | 60 |
| process oil⁴ | 5.4 | 4 | 4 | 4 | 4 |
| plasticizer⁵ | 0 | 0 | 0 | 10 | 10 |
| stearic acid | 2.5 | 1 | 1 | 1 | 1 |
| zinc oxide | 7 | 2.25 | 5 | 2.25 | 5 |
| tackifying resin | 0 | 0 | 0 | 3 | 3 |
| reinforcing resin⁶ | 3.3 | 0 | 0 | 0 | 0 |
| 40 MS flakes | 0 | 0 | 5 | 5 | 0 |
| antidegradant⁷ | 0.65 | 0 | 0 | 0 | 0 |
| sulfur | 2.5 | 0.7 | 2 | 0.7 | 2 |
| accelerators⁸ | 0.9 | 2.54 | 1.3 | 2.54 | 1.3 |

| | | | | | |
|---|---|---|---|---|---|
| ¹ natural and/or synthetic polyisoprenes, SMR-20 and Natsyn 2200 from Goodyear | | | | | |
| ² Neoprene WD | | | | | |
| ³ N299,N326,N660 | | | | | |
| ⁴ naphthenic or aromatic oils | | | | | |
| ⁵ tri-glycol ester type | | | | | |
| ⁶ methylene acceptor/ methylene donor type | | | | | |
| ⁷ phenylenediamine type | | | | | |
| ⁸ sulfenamides and/or thiurams | | | | | |

**Table 2**

| Sample | 1 | 2 | 3 | 4 | 5 |
|---|---|---|---|---|---|
| Mooney Scorch, MS@121°C | | | | | |
| Min. | 27.2 | 41.2 | 35.5 | 48.2 | 55 |
| T₅ | 7.3 | 6.06 | 14.31 | 20.61 | 37.68 |

| Rheometer, ODR @ 150°C | | | | | |
|---|---|---|---|---|---|
| T₂₅ | 2.78 | 2.88 | 3.95 | 6.66 | 7.98 |
| T₅₀ | 3.71 | 4.21 | 4.51 | 10.28 | 14.45 |
| T₉₀ | 8.98 | 18.53 | 6.88 | 33.36 | 43.16 |
| T_{S1} | 1.35 | 1.68 | 2.83 | 2.98 | 2.61 |
| MAX | 50.45 | 40.32 | 40.12 | 35.36 | 44.88 |
| LOW | 7.19 | 10.23 | 7.6 | 12.46 | 18.44 |
| DELTAT | 43.26 | 30.09 | 32.52 | 22.9 | 26.44 |

| Original Properties | | | | | |
|---|---|---|---|---|---|
| TENS (MPa) | 2.76 | 10.02 | 9.61 | 13.68 | 15.01 |
| Elongation, % | 514 | 244 | 330 | 447 | 236 |
| Modulus @ 50% | 2.01 | 2.79 | 2.28 | 1.79 | 2.79 |
| Modulus @ 100% | 3.79 | 5.68 | 4.13 | 3.50 | 6.45 |
| Modulus @ 200% | 9.08 | 9.28 | 7.33 | 7.58 | 14.23 |
| Modulus @ 300% | 15.06 | | 9.37 | 10.71 | |
| Hardness (Shore A) | 70 | 70 | 70 | 67 | 72 |

| Die C Tear, Original | | | | | |
|---|---|---|---|---|---|
| Die C (N/mm) | 94.82 | 35.30 | 34.24 | 48.00 | 39.39 |

| Adhesion | | | | | |
|---|---|---|---|---|---|
| Peel (N/25mm) | 67 | 182 | 236 | 93 | 76 |

Samples 1, 4, and 5 were controls, while samples 2 and 3 were representative of the present invention. As illustrated in Table 2, Samples 2 and 3 surprisingly and unexpectedly showed significantly higher adhesion to a cover compound containing epichlorohydrin than did the controls. Significantly, the combination of polyisoprene and chlorobutyl rubbers in the Samples 2 and 3 resulted in better adhesion than polyisoprene alone (Sample 1), or a chlorobutyl/neoprene combination (Samples 4 and 5).

## Claims

1. An airsleeve comprising an elastomeric liner, a reinforcing layer overlaying the liner and an elastomeric cover overlaying the reinforcing layer; the reinforcing layer comprising: textile fibers having distributed over surface portions thereof an resorcinol formaldehyde latex (RFL) adhesive and a vulcanizable plycoat rubber composition comprising 20 to 70 parts by weight of natural or synthetic polyisoprene rubber and 30 to 80 parts by weight of chlorinated butyl rubber.

2. The airsleeve of claim 1, wherein the cover and/or the liner comrises at least one rubber selected from the group consisting of epichlorohydrin rubber, polyisobutylene, halogenated butyl rubbers including brominated butyl rubber and chlorinated butyl rubber, natural rubber, polyisoprene, polybutadiene, styrene-butadiene rubber, and mixtures thereof.

3. The airsleeve of claim 1 or 2, wherein the plycoat rubber composition comprises 30 to 50 parts by weight of natural or synthetic polyisoprene rubber and 50 to 70 parts by weight of chlorinated butyl rubber.

4. The airsleeve of at least one of the previous claims, wherein said textile fibers are selected from the group consisting of woven fabrics, knitted fabric, spun bonded fabric or fiber cord.

5. The airsleeve of at least one of the previous claims, wherein said textile fibers comprise a material selected from the group consisting of rayon, nylon, polyester, aramid, cotton and combinations thereof.

6. The airsleeve of at least one of the previous claims, wherein said airsleeve is a component of a manufactured item selected from a shock absorber, a strut, a truck cab suspension spring, a truck driver seat spring, an automobile air spring and an industrial air spring.

7. The airsleeve of at least one of the previous claims, wherein said RFL comprises resorcinol, formaldehyde and at least one polymer selected from styrene-butadiene copolymer and vinylpyridene-styrene-butadiene terpolymer.

8. An airspring comprising the airsleeve of at least one of the previous claims.

9. An airspring according to claims 8, wherein said airspring is a a bellows type airspring.

10. An airspring according to claim 8, wherein said airspring is a rolling lobe airspring.
